# EUROPEAN PATENT SPECIFICATION

(11) **EP 2 771 822 B1**
(45) Date of publication and mention of the grant of the patent: **26.12.2018**
(21) Application number: 12843226.7
(22) Date of filing: 15.10.2012
(51) Int. Cl.: G06F 17/30

(54) **METHOD AND APPARATUS FOR PROVIDING OFFLINE BINARY DATA IN A WEB ENVIRONMENT**
VERFAHREN UND VORRICHTUNG ZUR OFFLINE-BEREITSTELLUNG VON BINÄREN DATEN IN EINER WEB-UMGEBUNG
PROCÉDÉ ET APPAREIL POUR FOURNITURE DE DONNÉES BINAIRES HORS LIGNE DANS UN ENVIRONNEMENT WEB

(30) Priority: 25.10.2011 US 201113281041
(43) Date of publication of application: 03.09.2014
(73) Proprietor: HERE Global B.V., 5611 ZT Eindhoven (NL)
(72) Inventor: TJIN, Andy, 10405 Berlin (DE); GIAMMARCHI, Andrea, 10405 Berlin (DE); ROSENTHAL, No'am, Sunnyvale, CA 94086 (US)
(74) Representative: Cohausz & Florack
(86) International application number: PCT/FI2012/050980
(87) International publication number: WO 2013/060927

(56) References cited:
- EP-A2- 2 525 290
- WO-A1-01/77894
- WO-A1-99/34286
- WO-A1-2008/089231
- WO-A1-2010/118019
- US-A1- 2005 050 461
- US-A1- 2005 270 311
- US-B1- 6 502 191

## Description

### BACKGROUND

Service providers and device manufacturers (e.g., wireless, cellular, etc.) are continually challenged to deliver value and convenience to consumers by, for example, providing compelling network services. One area of interest has been the development of increasingly complex services and applications (e.g., mapping, navigation, media players, etc.) as web applications to support, for instance, cross platform development. For example, many of these web applications seek to replicate the full fidelity experience of native applications in a browser-based environment complete with graphical and multimedia intensive user interfaces. However, providing this type of user experience in web applications often involves transfers of significant amounts of binary data (e.g., map tile data, images, videos, audio information, etc.), which can potentially result in high bandwidth costs, decreased performance, and unavailability when operating offline. Accordingly, service providers and device manufacturers face significant technical challenges to providing client-side solutions for storing and/or accessing binary data or other binary large objects (blobs) used by web applications.

An example of the prior art is found in US2005/270311 A1, also providing binary data in a web environment.

### SOME EXAMPLE EMBODIMENTS

Therefore, there is a need for an approach for enabling a web client to efficiently store potentially large amounts of binary data for offline use.

The present invention is defined in the appended independent claims.

According to one example, a method comprises determining a request from a web client for binary data. The method also comprises causing, at least in part, an encoding of the binary data into text data that is compatible with one or more databases of the web client that can hold multiple tables or object stores. The method further comprises causing, at least in part, a transmission of the text data to the web client, wherein the binary data is decodable from the text data.

According to another example, an apparatus comprises at least one processor, and at least one memory including computer program code for one or more computer programs, the at least one memory and the computer program code configured to, with the at least one processor, cause, at least in part, the apparatus to determine a request from a web client for binary data. The apparatus is also caused to cause, at least in part, an encoding of the binary data into text data that is compatible with one or more databases of the web client that can hold multiple tables or object stores. The apparatus is further caused to cause, at least in part, a transmission of the text data to the web client, wherein the binary data is decodable from the text data.

According to another example, a computer-readable storage medium carries one or more sequences of one or more instructions which, when executed by one or more processors, cause, at least in part, an apparatus to determine a request from a web client for binary data. The apparatus is also caused to cause, at least in part, an encoding of the binary data into text data that is compatible with one or more databases of the web client that can hold multiple tables or object stores. The apparatus is further caused to cause, at least in part, a transmission of the text data to the web client, wherein the binary data is decodable from the text data.

According to another example, an apparatus comprises means for determining a request from a web client for binary data. The apparatus also comprises means for causing, at least in part, an encoding of the binary data into text data that is compatible with one or more databases of the web client that can hold multiple tables or object stores. The apparatus further comprises means for causing, at least in part, a transmission of the text data to the web client, wherein the binary data is decodable from the text data.

According to one example, a method comprises causing, at least in part, a transmission of a request for binary data for presentation in a web client. The method also comprises receiving, in response to the request, text data encoding, at least in part, the binary data. The method further comprises causing, at least in part, a storage of the text data into one or more databases associated with the web client that can hold multiple tables or object stores.

According to another example, an apparatus comprises at least one processor, and at least one memory including computer program code for one or more computer programs, the at least one memory and the computer program code configured to, with the at least one processor, cause, at least in part, the apparatus to cause, at least in part, a transmission of a request for binary data for presentation in a web client. The apparatus is also caused to receive, in response to the request, text data encoding, at least in part, the binary data. The apparatus is further caused to cause, at least in part, a storage of the text data into one or more databases associated with the web client that can hold multiple tables or object stores.

According to another example a computer-readable storage medium carries one or more sequences of one or more instructions which, when executed by one or more processors, cause, at least in part, an apparatus to cause, at least in part, a transmission of a request for binary data for presentation in a web client. The apparatus is also caused to receive, in response to the request, text data encoding, at least in part, the binary data. The apparatus is further caused to cause, at least in part, a storage of the text data into one or more databases associated with the web client that can hold multiple tables or object stores.

According to another example, an apparatus comprises means for causing, at least in part, a transmission of a request for binary data for presentation in a web client. The apparatus also comprises means for receiving, in response to the request, text data encoding, at least in part, the binary data. The apparatus further comprises means for causing, at least in part, a storage of the text data into one or more databases associated with the web client that can hold multiple tables or object stores.

In addition, for various examples of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various examples of the invention, the following is also applicable: a method comprising facilitating access to at least one interface configured to allow access to at least one service, the at least one service configured to perform any one or any combination of network or service provider methods (or processes) disclosed in this application.

For various examples of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various examples of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various examples, the methods (or processes) can be accomplished on the service provider side or on the mobile device side or in any shared way between service provider and mobile device with actions being performed on both sides.

For various examples, the following is applicable: An apparatus comprising means for performing the methods of any of originally filed claims 1-10, 21-30, and 46-48.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable of enabling a web client to store binary data for offline use, according to one embodiment;
FIGs. 2A and 2B are diagrams of the components of a content platform and a web client, respectively, according to one embodiment;
FIG. 3 is a flowchart of the server side process for enabling a web client to store binary data for offline use, according to one embodiment;
FIG. 4 is a flowchart of the client side process for enabling a web client to store binary data for offline use, according to one embodiment;
FIGs. 5A and 5B are diagrams of an example data flow and the other data associated with the text data, respectively, as utilized in the processes of FIG. 3 and FIG. 4, according to various embodiments;
FIG. 6 is a diagram of user interfaces utilized in the processes of FIGs. 3 and 4, according to various embodiments;
FIG. 7 is a diagram of hardware that can be used to implement an embodiment of the invention;
FIG. 8 is a diagram of a chip set that can be used to implement an embodiment of the invention; and
FIG. 9 is a diagram of a mobile terminal (e.g., handset) that can be used to implement an embodiment of the invention.

### DESCRIPTION OF SOME EMBODIMENTS

Examples of a method, apparatus, and computer program for enabling a web client to store dynamic binary content offline are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

In various embodiments, mapping information is discussed as one example of binary data. It is contemplated that the embodiments are also applicable to any type of binary data or blob including. As used herein, mapping information pertains to data capable of being processed by an application or service for generating or presenting a map display of an area (e.g., city, town, street or combination thereof). Typically, such a map display is based on rendering map tiles which are image files depicting a delineated area of a map. The mapping information may also be used in connection with route information, wherein the route information is visually depicted in association with the map. In some embodiments, mapping information may include various icons, graphics, indicators and descriptors for representing one or more throughways, buildings, landmarks, waterways, parks, vehicles, people, etc.

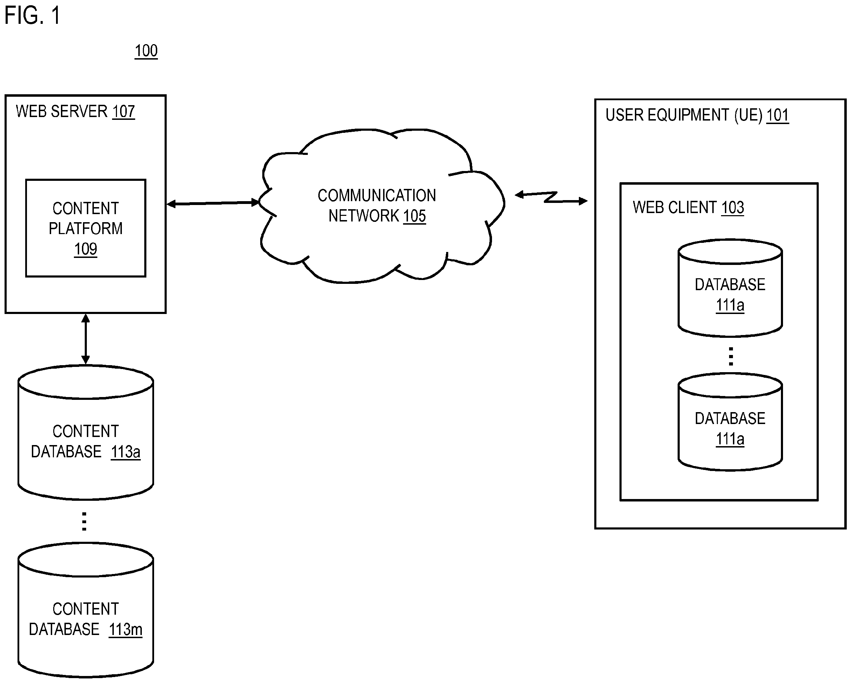

FIG. 1 is a diagram of a system capable of enabling a web client (e.g., web browser) to store binary data (e.g., map tile data, multimedia data, or a combination thereof) for offline use, according to one embodiment. The ability to store map tiles for offline use is particularly relevant because it is becoming increasingly popular for service providers and device manufacturers to develop data-intensive web applications that can burden a traditional web server-client architecture. For example, service providers often bundle or make available navigation and mapping services on an array of user devices (e.g., mobile handsets, computers, navigation devices, etc.). The navigation and mapping services often rely on transmitting large amounts of map data (e.g., as map tiles) for display at a user device. In some embodiments, map tiles are generated by a tile engine, which is a computer graphics technique that generates a larger graphic from a number of smaller graphics to save memory (e.g., by storing only a subset of map tiles rather than the entire visible portion of a particular region of a map) and increase real-time rendering performance.

However, when map tiles are used in the context of a web application, transmitting the map tiles from a server to the web client can cause a user to incur significant mobile data costs (e.g., roaming charges), reduce overall performance (e.g., increase latency due to transmission speed and overhead). For example, in order for the mapping services to provide real-time contextually relevant information, a greater number of map tiles are required which can further increase the latency and data costs associated with using such mapping services. In other words, if a user is traveling, a greater number of map tiles are updated relative to the real-time location of the user. In another example, if the user is looking at mapping information (e.g., France), the user may also wish to look at proximately related information (e.g., the eastern coast of England) without having to experience delays in data transmission or incur additional data costs (e.g., roaming charges) associated with retrieving the corresponding map tiles and/or related information.

Traditionally, to avoid having to constantly retrieve data on demand, web clients employ local caches. For example, many web clients provide for local caches to store binary data and text data such as an HTML 5 Application Cache. However, this type of local storage or cache is often static, meaning that storage is defined before the web application executes. Although this type of cache is appropriate when the data does not often change during the execution of the web application (e.g., when displaying traditional web pages), it often is not appropriate when a web application programmatically determines the data items it needs during execution. Under the latter scenario, the web application does not know what data it will need before running the application. Some web protocols enable dynamic storage (e.g., storage that can be programmatically populated by a web application during execution), but this capability is often limited to dynamic storage of text data or have limited capacities which restrict their applicability to binary data (e.g., HTML 5 LocalStorage which is dynamic for textual key-value pairs).

To address this problem, a system 100 of FIG. 1 provides for offline storage of binary data at the web client by introducing the capability to encode binary data (e.g., map tile data) into a text-based format for persistent storage in dynamic text-based storage provided for in standard web clients (e.g., HTML 5 compliant browsers). In one embodiment, the binary data itself (e.g., images such as map tiles) can be dynamically determined by the web application and stored (e.g., in an HTML 5 compatible database). In other embodiments, the encoding of the binary data may include additional data (e.g., metadata) that describes or is otherwise related to the binary data. Accordingly, when needed, the web client can then retrieve the text data in which the binary data is encoded from the persistent storage and then decode the binary data without having to request and receive the data from a web server or other server-side component. In one embodiment, the web client can store the text data in one or more databases that can hold multiple tables or object stores and with adequate capacity for storing binary data. In one embodiment, to improve performance, the web client can employ databases that support asynchronous database actions that can run while the rest of the main web application continues to execution. For example, an asynchronous database action returns a value or result after a certain amount of time and at that time, the main program handles the return values accordingly.

In the context of a mapping service, the system 100 can store binary data (e.g., map tiles) offline at a web client (e.g., a web browser) in dynamic storage local to the client (e.g., any database that can hold multiple tables or object stores). By way of example, the system 100 converts the map tiles (e.g., bitmaps or portable network graphics (PNG) images) to text data using a binary-to-text encoding algorithm (e.g., Base64, uuencode, yenc, mimencode, base85, etc.). In another example, the map tiles can be converted from any other existing image format such as JPG, TIFF, GIF, etc. After the system 100 converts the map tiles to text data, the system 100 sends the text files to a web client and the web client then stores those text files in a local database that can hold multiple tables or object stores(e.g., a Web Structured Query Language (SQL) database).

In one embodiment, the system 100 may also cause an association or aggregation of other data (e.g., metadata such as coordinate data, point-of-interest data, transportation data, street name data, icon data, advertisements, or a combination thereof related to the binary data) with the text data prior to transmission of the text files from the web server to the web client. In another embodiment, the system 100 may cause an association or aggregation of the other data with the text data after the text files have been transmitted to the web client. When a user is interested in viewing the mapping information, the system 100 decodes the text files with the binary-to-text decoding algorithm and presents the binary data (e.g., displays the original bitmap images if the binary data is image data, plays a music track if the binary data is audio data, etc.).

In the example where other data is associated with the text data, the system 100 first separates the other data from the text files before decoding the text data. The user can thereafter determine whether to also view the other data. In one example, the system 100 can permit an end-user to manually input and/or store information on the client side that seems relevant to the map tiles that he or she is viewing. As a result of the system 100, the user is able to use a map and/or portions of the map even when he or she is offline, the user can save mobile data costs (including roaming costs) while he or she is still online, and the map tiles can be rendered faster on the display of the user's mobile device (e.g., a mobile phone) from the databases.

As shown in FIG. 1, the system 100 comprises a user equipment (UE) 101 (e.g., a mobile handset) containing a web client 103 (e.g., a web browser) having connectivity to a web server 107 containing a content platform 109 via a communication network 105. The UE 101 is also connected to one or more databases 111 (also collectively referred to as databases 111) within the web client 103 that can hold multiple tables or object stores. The web server 107 is also connected to one or more content databases 113a-113n (also collectively referred to as content databases 113). In one example, the content databases 113 may contain binary data (e.g., map tiles) provisioned by a map tile generator (not shown) as well as other data associated with the binary data (e.g., coordinate data, point-of-interest data, transportation data, street name data, icon data, advertisements, or a combination thereof). Both the content platform 109 and the content databases 113 may exist in whole or in part within the web server 107, or independently. In certain embodiments, the web server 107 may have connectively to the content database 113 via the communication network 105.

In one embodiment, from the server side perspective, the content platform 109 determines a request from the web client 103 of the UE 101 for binary data related to mapping information. Again, a request for mapping information is particularly relevant because it is becoming increasingly popular for service providers and device manufacturers to bundle or make available navigation and mapping services on an array of user devices (e.g., the UE 101). The content platform 109 then causes, at least in part, an encoding of the binary data related to mapping information (e.g., map tile data, multimedia data, or a combination thereof) into text data that is compatible with the databases 111 of the web client 103. Thereafter, the content platform 109 causes, at least in part, a transmission of the text data to the web client 103, wherein the binary data is decodable from the text data.

In one embodiment, from the client side perspective, the web client 103 causes, at least in part, a transmission of a request for binary data related to mapping information (e.g., map tiles data, image data, or a combination thereof) for presentation in the web client 103 of the UE 101. In response to the request, the web client 103 receives from the content platform 109 of the web server 107, text data encoding, at least in part, the binary data and causes, at least in part, a storage of the text data into the databases 111 associated with the web client 103. After the text data is stored within the databases 111 associated with the web client 103, the web client 103 causes, at least in part, a decoding, a use, or a combination thereof of the text data to determine the binary data, wherein the decoding, the use, or a combination thereof is based, at least in part, on an offline state of the web client 103, resource availability, or a combination thereof. Once the text data has been decoded back to the binary data (e.g., map tiles, image tiles, or a combination thereof) the web client 103 can cause the presentation, rendering, and/or display of the binary data at the UE 101.

In another embodiment, the content platform 109 determines other data (e.g., coordinate data, point-of-interest data, transportation data, street name data, icon data, advertisements, or a combination thereof) is associated with the binary data. The other data may be contained within the content databases 113 or it may be accessible over the communication network 105 or it can manually inputted by an end-user. The content platform 109 then causes, at least in part, an association (e.g., packet aggregation) of the other data with the text data before the text data is transmitted to the web client 103 for possible presentation, rendering, and/or display at the UE 101. Once the web client 103 determines the databases 111 associated with the web client 103 contain both binary data and the other data, the web client 103 processes and/or facilitates a processing of the text data to cause, at least in part, an extraction, an addition, or a combination thereof of the other data associated with the binary data and then causes, at least in part, a presentation of at least a portion of the other data in association with the binary data. The determination by the content platform 109 or the web client 103 to associate other data with the binary data can be based, at least in part, on an end-user's interest to interact with the other data associated with the binary data. For example, the end-user may want to view a map with points-of-interest (POIs) on it (e.g., restaurant chain presence in a particular city) or the end-user may want to interact with a particular POI on the map (e.g., learning more information about that particular POI) all while the web client 103 is offline.

By way of example, the communication network 105 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, code division multiple access (CDMA), wideband code division multiple access (WCDMA), wireless fidelity (WiFi), wireless LAN (WLAN), Bluetooth®, Internet Protocol (IP) data casting, satellite, mobile ad-hoc network (MANET), and the like, or any combination thereof.

The UE 101 is any type of mobile terminal, fixed terminal, or portable terminal including a mobile handset, station, unit, device, multimedia computer, multimedia tablet, Internet node, communicator, desktop computer, laptop computer, notebook computer, netbook computer, tablet computer, personal communication system (PCS) device, personal navigation device, personal digital assistants (PDAs), audio/video player, digital camera/camcorder, positioning device, television receiver, radio broadcast receiver, electronic book device, game device, or any combination thereof, including the accessories and peripherals of these devices, or any combination thereof. It is also contemplated that the UE 101 can support any type of interface to the user (such as "wearable" circuitry, etc.).

By way of example, the UE 101, the web client 103, the web server 107, and the content platform 109 communicate with each other and other components of the communication network 105 using well known, new or still developing protocols. In this context, a protocol includes a set of rules defining how the network nodes within the communication network 105 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

In one embodiment, the web client 103 and the web server 107 may interact according to a client-server model. According to the client-server model, a client process sends a message including a request to a server process, and the server process responds by providing a service. The server process may also return a message with a response to the client process. Often the client process and server process execute on different computer devices, called hosts, and communicate via a network using one or more protocols for network communications. The term "server" is conventionally used to refer to the process that provides the service, or the host computer on which the process operates. Similarly, the term "client" is conventionally used to refer to the process that makes the request, or the host computer on which the process operates. As used herein, the terms "client" and "server" refer to the processes, rather than the host computers, unless otherwise clear from the context. In addition, the process performed by a server can be broken up to run as multiple processes on multiple hosts (sometimes called tiers) for reasons that include reliability, scalability, and redundancy, among others.

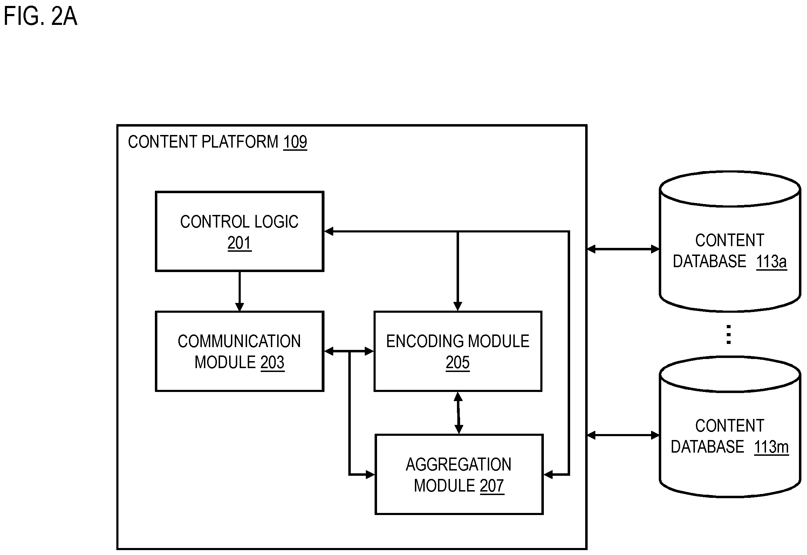

FIG. 2A is a diagram of the components of the content platform 109, according to one embodiment. By way of example, the content platform 109 includes one or more server side components for enabling a web client to store binary content for offline use. It is contemplated that the functions of these components may be combined in one or more components or performed by other components of equivalent functionality. In this embodiment, the content platform 109 includes a control logic 201, a communication module 203, an encoding module 205, and an aggregation module 207.

The control logic 201 oversees tasks, including tasks performed by the communication module 203, the encoding module 205, and the aggregation module 207. For example, although the other modules may perform the actual task, the control logic 201 may determine when and how those tasks are performed or otherwise direct the other modules to perform the task.

The communication module 203 is used for communication between the content platform 109, the web server 107, and the web client 103 of the UE 101. The communication module 203 may be used to communicate commands, requests, data, etc. For example, the communication module 203 may be used to cause loading of the encoding module 205 with binary data (e.g., map tile data, multimedia data, or a combination thereof) from a map tile generator (not shown), the content databases 113, another source accessible over the communication network 105, or a combination thereof. The communication module 203 may also be used to cause loading of the aggregation module 207 with other data (e.g., coordinate data, point-of-interest data, transportation data, street name data, icon data, advertisements, or a combination thereof) from the content databases 113, another source accessible over the communication network 105, or a combination thereof. The communication module 203 may further be used to determine the properties of the databases 111, particularly with regard to the type of encoding of the binary data by the encoding module 205.

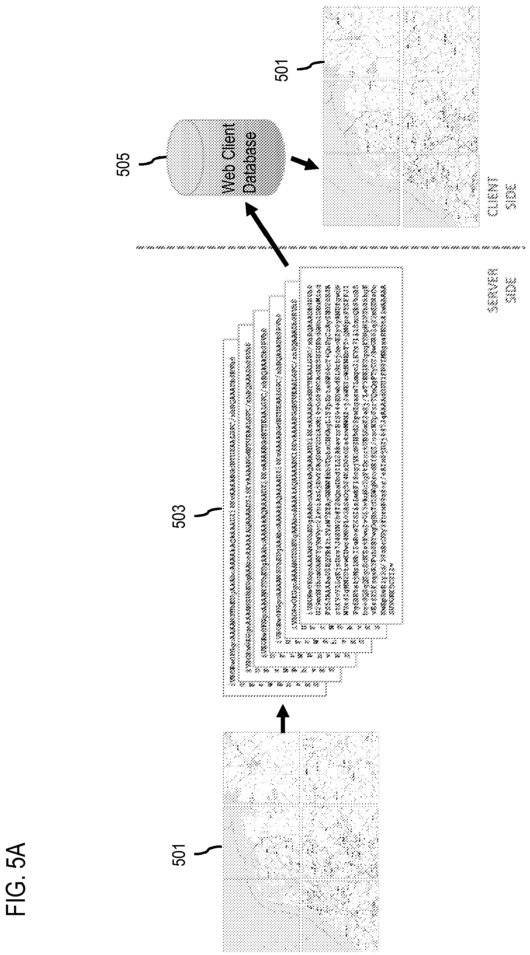

The encoding module 205 is used to encode the binary data (e.g., map tiles comprised of bitmaps images and/or PNG images) into text data that is compatible with the databases 111 as determined by the communication module 203 using a binary-to-text encoding algorithm (e.g., Base64, uuencode, yenc, mimencode, base85, etc.). In another example, the encoding module 205 may encode the binary data consisting of map tiles or image tiles comprised of another image formats such as JPG, TIFF, GIF, etc. An illustrative example of the encoding process is depicted in FIG. 5A.

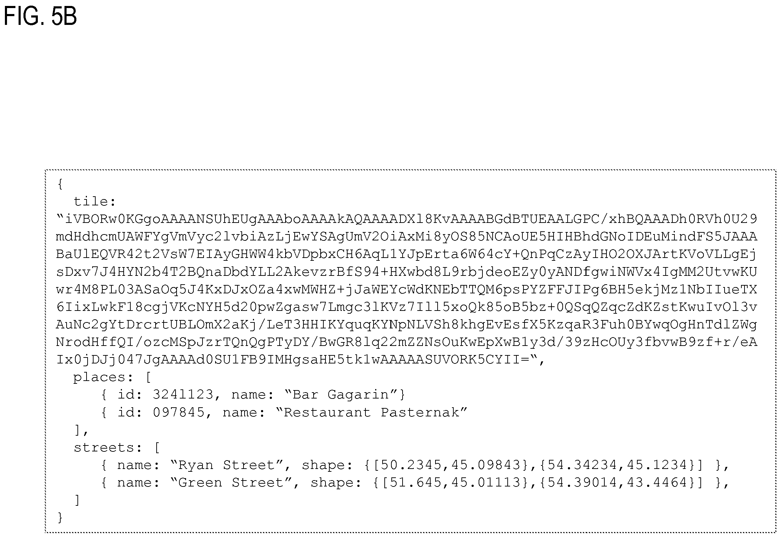

In one embodiment, the aggregation module 207 is used to associate and/or aggregate other data (e.g., coordinate data, point-of-interest data, transportation data, street name data, icon data, advertisements, or a combination thereof) obtained from the content databases 113, another source accessible over the communication network 105, or a combination thereof with the text data prior to transmission of the text data by the communication module 203 to the web client 103 of the UE 101. An example of the aggregated data is depicted in FIG. 5B. As previously discussed, the other data could be anything that is relevant to the binary data. For example, the other data could include coordinates of the map area it is covering; point-of-interest information for all of the places inside of the one or more map tiles; public transportation time schedules for all of the stations inside the one or more map tiles; all of the street names inside of the one or more map tiles; icons that have to be placed on top of the one or more map tiles; and advertisements that need to be displayed on the one or more map tiles.

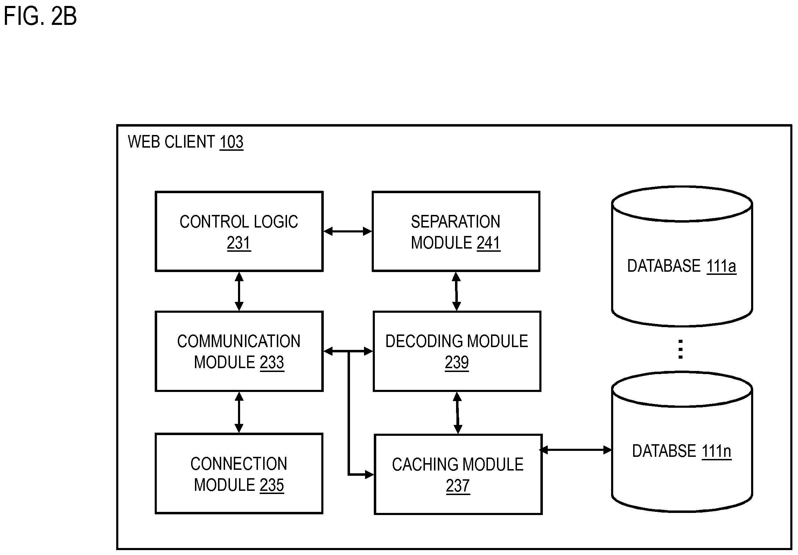

FIG. 2B is a diagram of the components of the web client 103, according to one embodiment. By way of example, the web client 103 includes one or more client side components for enabling a web client to store binary content for offline use. It is contemplated that the functions of these components may be combined in one or more components or performed by other components of equivalent functionality. In this embodiment, the web client 103 includes a control logic 231, a communication module 233, a connection module 235, a caching module 237, a decoding module 239, a separation module 241, and databases 111 that can hold multiple tables or object stores.

Similar to the control logic 201 of the content platform 109, the control logic 231 oversees tasks, including tasks performed by the communication module 233, the connection module 235, the caching module 237, the decoding module 239, the separation module 241, and the databases 111. For example, although the other modules may perform the actual task, the control logic 231 may determine when and how those tasks are preformed or otherwise direct the other modules to perform the task.

Similar to the communication module 203 of the content platform 109, the communication module 233 is used for communication between the web client 103, the UE 101, and the content platform 109 of the web server 107. The communication module 233 may be used to communicate commands, requests, data, etc. For example, the communication module 233 may be used to cause the transmission of the encoded text data from the content platform 109 to the databases 111 associated with the web client 103. In addition, the communication module 233 is used to present, render, and/or display the binary data (e.g., map tiles, image tiles, or a combination thereof) in the web client 103 of the UE 101.

The connection module 235 in association with the communication module 233 is used to identify an offline or online status of a network and/or session. In one embodiment, the connection module 235 may have access to the socket (e.g., the transmission control protocol (TCP) socket) used by the web client 103 to communicate with the content platform 109 of the web server 107. The connection module 235 may obtain an identifier (e.g., socket identifier (ID)) associated with the socket to identify whether the corresponding connection is active (e.g., a persistent connection). Alternatively, the connection module 235 may employ the use of other status determination messages, including the use of different worker processes/threads to identify the persistent or reusable connection. A processing result may include, for example, an active connection, inactive connection, active session, inactive session, or a combination thereof. The determination of the state of the web client 103 by the connection module 235 is important because the web client 103 causes, at least in part, a decoding, a use, or a combination thereof of the text data in the databases 111 to determine the binary data (e.g., map tile data, multimedia data, or a combination thereof), wherein the decoding, the use, or a combination thereof is based, at least in part, on an offline state of the web client 103, resource availability, or a combination thereof.

The caching module 237 caches the encoded text data transmitted by the content platform 109 of the web server 107 in the databases 111. The caching module 237 may regulate the text data stored in the databases 111. For example, the caching module 237 may determine the amount of text data (i.e., mapping information) to be stored, which mapping information should be stored (e.g., depending on frequency, user-defined or automated priority, etc.), the level of accuracy required of the mapping information before it is stored, etc.

Similar to the encoding module 205 of the content platform 109, the decoding module 239 is used to decode the text data back into the binary data (e.g., map tiles comprised of bitmaps images and/or PNG images) for presentation, rendering, and/or display in the web client 103 using a binary-to-text decoding algorithm (e.g., Base64, uuencode, yenc, mimencode, base85, etc.). Again, in another example, the decoding module 239 may decode the text data into map tiles or image tiles comprised of other image formats such as JPG, TIFF, GIF, etc. After the text data has been decoded by the decoding module 239, the communication module 233 is used to present, render, and/or display the binary data (e.g., bitmap images of the map tiles) in the web client 103 of the UE 101.

In one embodiment, the separation module 241 is used to separate the other data (e.g., coordinate data, point-of-interest data, transportation data, street name data, icon data, advertisements, or a combination thereof) associated and/or aggregated with the binary data (e.g., map tiles, image times, or a combination thereof). The separation module 241 in association with the communication module 233 is also used to present, render, and/or display at least a portion of the other data in association with the binary data. For example, as previously discussed, the aggregation and thereafter presentation, render, and/or or display of the other data with the binary data can enable an end-user to interact with the other data associated with the binary data. For example, the end-user can view a map with points-of-interest (POIs) on it (e.g., restaurant chain presence in a particular city) or the user can interact with a particular POI on the map (e.g., learning more information about that particular POI) all while the web client 103 is offline.

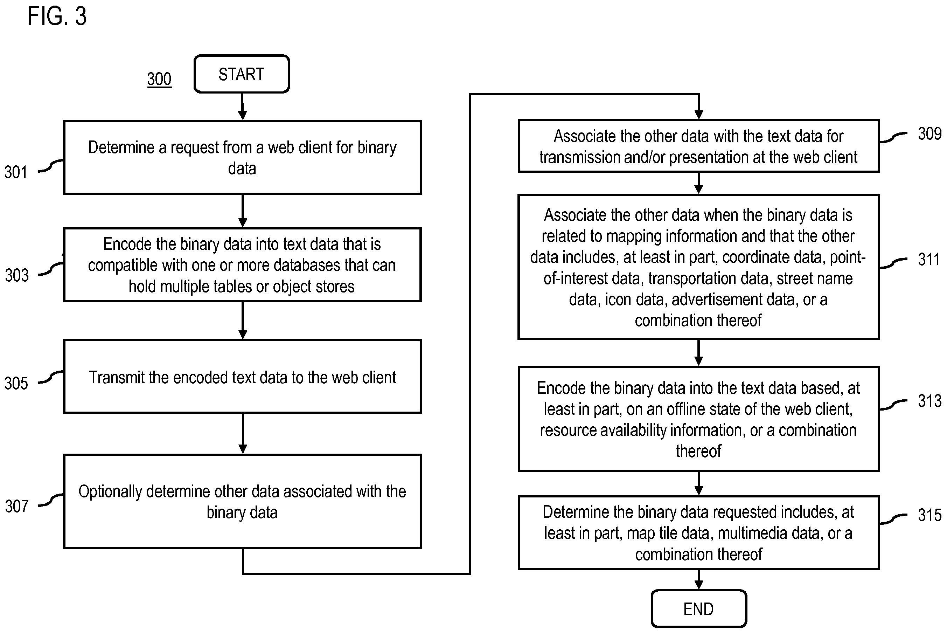

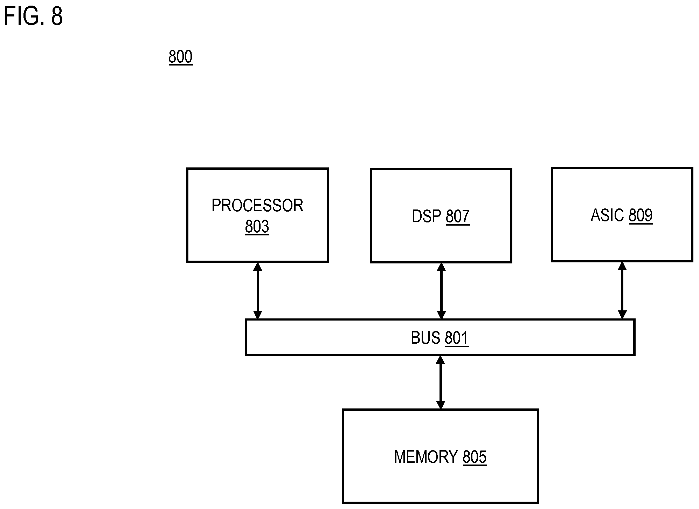

FIG. 3 is a flowchart of a server side process for enabling a web client to store binary content for offline use, according to one embodiment. In one embodiment, the content platform 109 performs the process 300 and is implemented in, for instance, a chip set including a processor and a memory as shown in FIG. 8. In step 301, the content platform 109 determines a request from a web client for binary data. For example, an end-user may use a web browser associated with his or her mobile device (e.g., a mobile phone) to make a request to view a map or a portion of map on his or her mobile device.

In step 303, the content platform 109 causes, at least in part, an encoding of the binary data into text data that is compatible with one or more databases of the web client that can hold multiple tables or object stores (e.g., a Web SQL database). In one embodiment, to improve performance, the web client can employ databases that support asynchronous database actions that can run while the rest of the main web application continues to execution. For example, an asynchronous database action returns a value or result after a certain amount of time and at that time, the main program handles the return values accordingly.

In step 305, the content platform 109 causes, at least in part, a transmission of the text data to the web client, wherein the binary data is decodable from the text data. In step 307, the content platform 109 determines other data associated with the binary data. For example, the other data could be anything that is relevant to the binary data. In the example where the binary data relates to mapping information and comprises one or more map tiles, the other data, for example, could include coordinates of the map area it is covering; point-of-interest information for all of the places inside of the one or more map tiles; public transportation time schedules for all of the stations inside the one or more map tiles; all of the street names inside of the one or more map tiles; icons that have to be placed on top of the one or more map tiles; and advertisements that need to be displayed on the one or more map tiles.

In step 309, the content platform 109 causes, at least in part, an association of the other data with the text data for presentation at the web client. In one example, the other data is associated with the text data through an association and/or aggregation process in order to join and thereafter transmit the combined data as a single unit to increase network efficiency. In another embodiment, the other data is associated with the text data after the text data has been transmitted to the web client. Moreover, in one example, an end-user can also manually input information that seems relevant to the map tile he or she is viewing (e.g., notes or observations).

In step 311, the content platform 109 determines to associate the other data with the binary data wherein the binary data is related to mapping information, and wherein the other data includes, at least in part, coordinate data, point-of-interest data, transportation data, street name data, icon data, advertisement data, or a combination thereof. As previously discussed, this particular association enriches the quality of the mapping information presented to an end-user and also enables the end-user to possibly interact with the other data associated with the mapping information even when the web client is offline.

In step 313, the content platform 109 causes, at least in part, an encoding of the binary data into text data, wherein the binary data is decoded from the text data based, at least in part, on an offline state of the web client, resource availability information, or a combination thereof. The encoding process increases the size of the transmitted data by approximately 33% therefore it is typically disadvantageous to encode the binary data into text data unless there is a determination that the web client is offline, there are limited resources available, or a combination thereof. As previously discussed, in contrast to the increased data size, encoding the binary data is advantageous because the end-user is able to use the mapping information even when he or she is offline; the end-use is able to save mobile data costs (including roaming costs) while online, and the requested mapping information is rendered faster on the display of a mobile device from the local storage.

In step 315, the content platform 109 causes, at least in part, an encoding of the binary data into text data, wherein the binary data includes, at least in part, map tile data, multimedia data, or a combination thereof. In addition to map tile images, the content platform 109 can also cause the encoding of multimedia data (e.g., music data) to make the multimedia data available to user offline (e.g., a playlist or one or more songs).

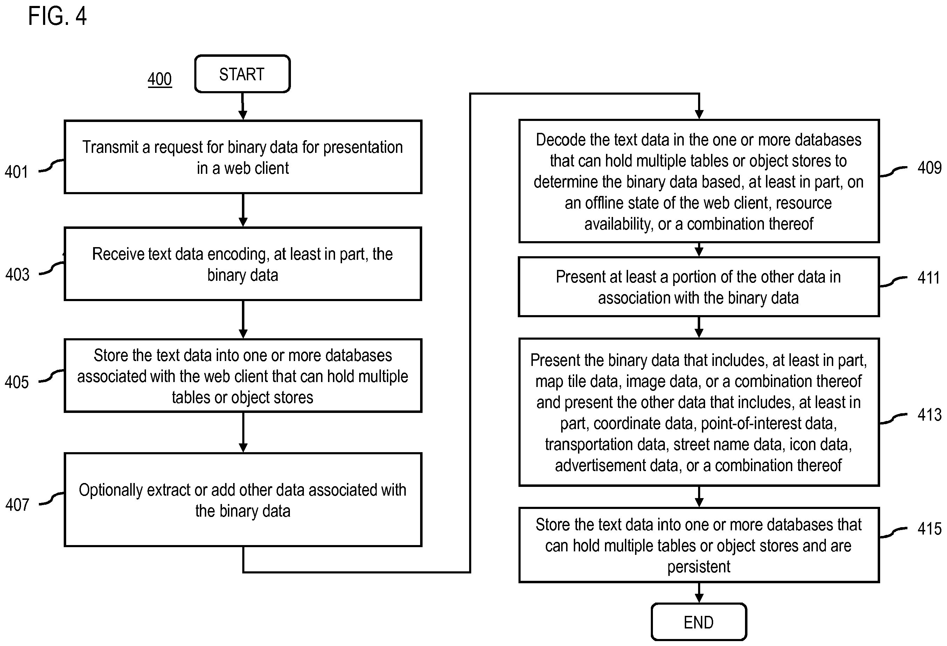

FIG. 4 is a flowchart of a client side process for enabling a web client to store binary content for offline use, according to one embodiment. In one embodiment, the web client 103 performs the process 400 and is implemented in, for instance, a chip set including a processor and a memory as shown in FIG. 8. In step 401, the web client 103 causes, at least in part, a transmission of a request for binary data for presentation in a web client. As previously discussed, in one example, an end-user may use a web client (e.g., a web browser) associated with his or her mobile device (e.g., a mobile phone) to make a request to view a map or a portion of map on his or her mobile device.

In step 403, the web client 103 receives, in response to the request, text data encoding, at least in part, the binary data. Again, in one example, the binary data (e.g., map tiles comprised of bitmaps and/or PNG images) is converted to text data using a binary-to-text encoding algorithm (e.g., Base64, uuencode, yenc, mimencode, base85, etc.). In one example, Base64 is used for the encoding of the binary data because it is one of the more commonly used encoding schemes and therefore the text data is likely to have a high probability of being compatible with the databases associated the web client 103. In step 405, the web client 103 causes, at least in part, a storage of the text data into one or more databases associated with the web client that can hold multiple tables or object stores. As previously discussed, the storage of the text data into one or more databases associated with the web client enables the end-user to use a map and/or portions of the map even when he or she is offline, save mobile data costs (including roaming costs) while he or she is still online, and the map can be rendered faster on the display of the end-user's mobile device (e.g., a mobile phone) from the databases.

In step 407, the web client 103 processes and/or facilitates a processing of the text data to cause, at least in part, an extraction, an addition, or a combination thereof of other data associated with the binary data. For example, an information separation process is used to separate the coordinate data, point-of-interest data, transportation data, street name data, icon data, advertisements, or a combination thereof associated with the map tiles, image tiles, or a combination thereof. As previously discussed, in one example, the other data and binary data are associated and/or aggregated prior to transmission of the text data in order to increase network efficiency. In another example, the other data is associated with the binary data after the text data has been transmitted to the web client and in a further example, an end-user can also manually input information that seems relevant to the map tile he or she is viewing (e.g., notes or observations).

In step 409, the web client 103 causes, at least in part, a decoding, a use, or a combination thereof of the text data in the one or more databases associated with the web client that can hold multiple tables or object stores to determine the binary data, wherein the decoding, the use, or a combination thereof is based, at least in part, on an offline state of the web client, resource availability information, or a combination thereof. Again, the encoding process increases the size of the transmitted data by approximately 33% therefore it is typically disadvantageous to encode the binary data into text data. However, in the example where there is a determination that the web client is offline, there are limited resources available, or a combination thereof it is advantageous to encode the binary data because as a result the end-user is able to use the mapping information even when he or she is offline; the end-use is able to save mobile data costs (including roaming costs) while online, and the requested mapping information is rendered faster on the display of a mobile device from the stored area.

In step 411, the web client 103 causes, at least in part, a presentation of at least a portion of the other data in association with the binary data. In step 413, the web client 103 causes, at least in part, a presentation of at least a portion of the other data in association with the binary data, wherein the binary data includes, at least in part, map tile data, multimedia data, or combination thereof, and wherein the other data includes, at least in part, coordinate data, point-of-interest data, transportation data, street name data, icon data, advertisement data, or a combination thereof.

In step 415, the web client 103 causes, at least in part, an encoding of binary data into text data that is compatible with one or more databases, wherein the one or more databases that can hold multiple tables or object stores are persistent. Persistence describes the ability of the content to outlive and/or exist after the process that created it is terminated or ends. For example, if the binary data (e.g., map tiles, image tiles, or a combination thereof) is still available to an end-user offline, it can be considered that the binary data was dynamically stored content persistently in the databases associated with the web client 103 and the UE 101.

FIGs. 5A and 5B are diagrams of an example data flow and the other data associated with the binary data, respectively, as utilized in the processes of FIG. 3 and FIG. 4, according to various embodiments. As shown, FIG. 5A illustrates an embodiment of the data flow of the binary data 501, in this instance map tiles, upon request from a web client. For example, the binary data 501 is encoded into text data 503 using a Base64 binary-to-text encoding algorithm. In this instance, the text data 503 is transmitted without any other data to the web client database 505 that can hold multiple tables or object stores. The text data 503 is thereafter decoded using the Base64 binary-to-text decoding algorithm and the binary data 501 is then presented, rendered, and/or displayed in the web client of the UE 101. As previously discussed, the binary data 501 is encoded into the text data 503 based, at least in part, on an offline state of the web client, resource availability information, or a combination thereof.

FIG. 5B is an illustrative example of other data associated with text data prior to transmission of the text data to the web client. In this instance, the binary data is again encoded into the text data using a Base64 binary-to-text encoding algorithm, however, it is also apparent that point-of-interest data (e.g., "Bar Gagarin" and "Restaurant Pasternak") and street name data (e.g., "Ryan Street" and "Green Street") have also been associated with the text data.

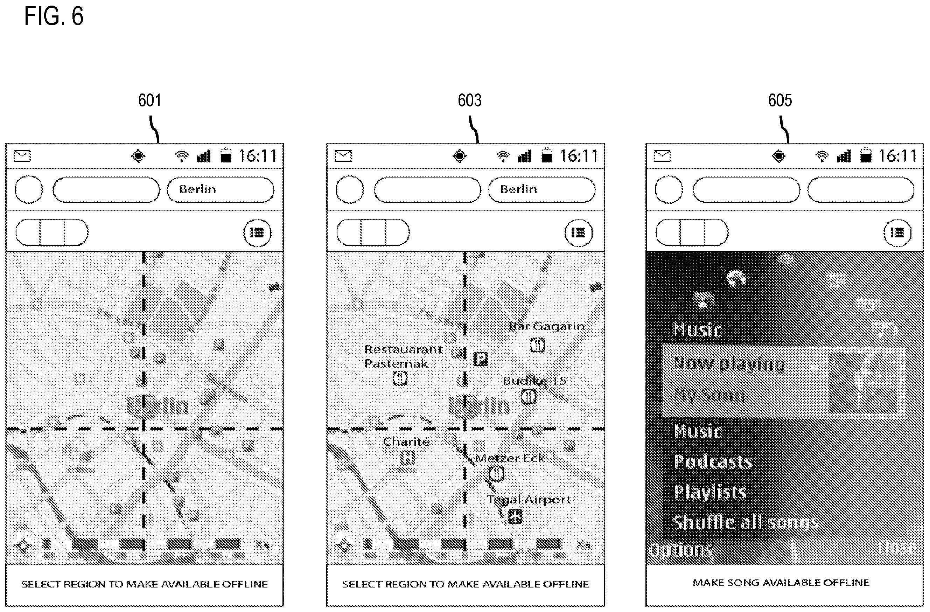

FIG. 6 is a diagram of user interfaces utilized in the processes of FIGs. 3 and 4, according to various embodiments. As shown, the example user interfaces of FIG. 6 include one or more user interface elements and/or functionalities created and/or modified based, at least in part, on information, data, and/or signals resulting from the processes (e.g., processes 300 and 400) described with respect to FIGs. 3 and 4. More specifically, FIG. 6 illustrates three user interfaces (e.g., interfaces 601, 603, and 605) depicting various embodiments. As shown in user interface 601, the web client prompts a user to make one or more map regions (e.g., a specific quadrant of Berlin) available offline in order to reduce mobile data costs associated with the provisioning of the required map tiles, for example. As shown in user interface 603, the web client causes the display of the other data (e.g., restaurants, an airport, and a Hospital) on top of a map of Berlin. In one example, a user can further interact with the various point-of-interest (e.g., Bar Gagarin) to see more information about that point-of-interest (e.g., hours of operation, menus, clientele, etc.). As shown in user interface 605, the web client prompts a user to make the "now playing" song also available for listening offline.

The processes described herein for enabling a web client to store dynamic binary content offline may be advantageously implemented via software, hardware, firmware or a combination of software and/or firmware and/or hardware. For example, the processes described herein, may be advantageously implemented via processor(s), Digital Signal Processing (DSP) chip, an Application Specific Integrated Circuit (ASIC), Field Programmable Gate Arrays (FPGAs), etc. Such exemplary hardware for performing the described functions is detailed below.

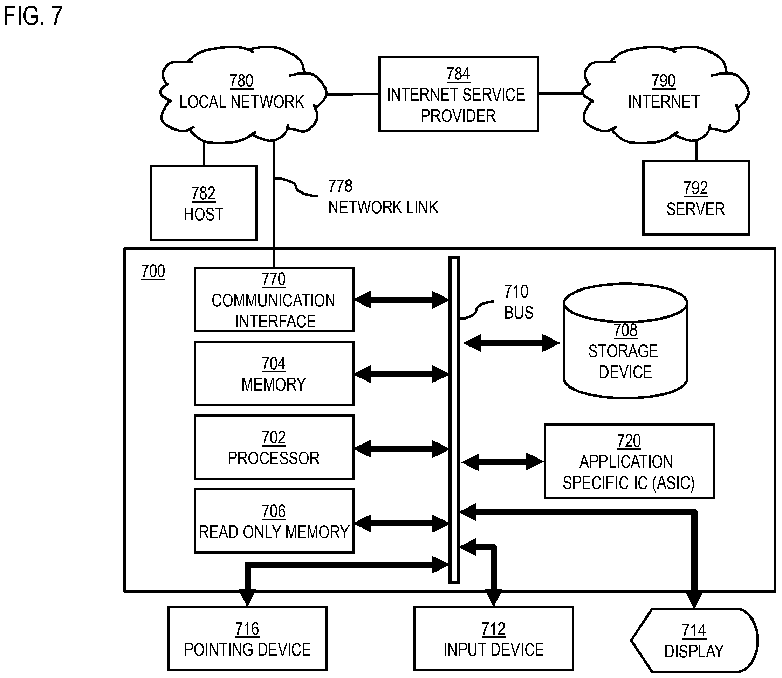

FIG. 7 illustrates a computer system 700 upon which an embodiment of the invention may be implemented. Although computer system 700 is depicted with respect to a particular device or equipment, it is contemplated that other devices or equipment (e.g., network elements, servers, etc.) within FIG. 7 can deploy the illustrated hardware and components of system 700. Computer system 700 is programmed (e.g., via computer program code or instructions) to enable a web client to store dynamic binary content offline as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 700, or a portion thereof, constitutes a means for performing one or more steps of enabling a web client to store dynamic binary content offline.

A bus 710 includes one or more parallel conductors of information so that information is transferred quickly among devices coupled to the bus 710. One or more processors 702 for processing information are coupled with the bus 710.

A processor (or multiple processors) 702 performs a set of operations on information as specified by computer program code related to enable a web client to store dynamic binary content offline. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 700 also includes a memory 704 coupled to bus 710. The memory 704, such as a random access memory (RAM) or any other dynamic storage device, stores information including processor instructions for enabling a web client to store dynamic binary content offline. Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or any other static storage device coupled to the bus 710 for storing static information, including instructions, that is not changed by the computer system 700. Some memory is composed of volatile storage that loses the information stored thereon when power is lost. Also coupled to bus 710 is a non-volatile (persistent) storage device 708, such as a magnetic disk, optical disk or flash card, for storing information, including instructions, that persists even when the computer system 700 is turned off or otherwise loses power.

Information, including instructions for enabling a web client to store dynamic binary content offline, is provided to the bus 710 for use by the processor from an external input device 712, such as a keyboard containing alphanumeric keys operated by a human user, a microphone, an Infrared (IR) remote control, a joystick, a game pad, a stylus pen, a touch screen, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT), a liquid crystal display (LCD), a light emitting diode (LED) display, an organic LED (OLED) display, a plasma screen, or a printer for presenting text or images, and a pointing device 716, such as a mouse, a trackball, cursor direction keys, or a motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of ASICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners and external disks. In general the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic or electromagnetic signals, including infrared and optical signals that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network 105 for enabling a web client to store dynamic binary content offline to the UE 101.

The term "computer-readable medium" as used herein refers to any medium that participates in providing information to processor 702, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 708. Volatile media include, for example, dynamic memory 704. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 720.

Network link 778 typically provides information communication using transmission media through one or more networks to other devices that use or process the information. For example, network link 778 may provide a connection through local network 780 to a host computer 782 or to equipment 784 operated by an Internet Service Provider (ISP). ISP equipment 784 in turn provides data communication services through the public, world-wide packet-switching communication network of networks now commonly referred to as the Internet 790.

A computer called a server host 792 connected to the Internet hosts a process that provides a service in response to information received over the Internet. For example, server host 792 hosts a process that provides information representing video data for presentation at display 714. It is contemplated that the components of system 700 can be deployed in various configurations within other computer systems, e.g., host 782 and server 792.

At least some embodiments of the invention are related to the use of computer system 700 for implementing some or all of the techniques described herein. According to one embodiment of the invention, those techniques are performed by computer system 700 in response to processor 702 executing one or more sequences of one or more processor instructions contained in memory 704. Such instructions, also called computer instructions, software and program code, may be read into memory 704 from another computer-readable medium such as storage device 708 or network link 778. Execution of the sequences of instructions contained in memory 704 causes processor 702 to perform one or more of the method steps described herein. In alternative embodiments, hardware, such as ASIC 720, may be used in place of or in combination with software to implement the invention. Thus, embodiments of the invention are not limited to any specific combination of hardware and software, unless otherwise explicitly stated herein.

The signals transmitted over network link 778 and other networks through communications interface 770, carry information to and from computer system 700. Computer system 700 can send and receive information, including program code, through the networks 780, 790 among others, through network link 778 and communications interface 770. In an example using the Internet 790, a server host 792 transmits program code for a particular application, requested by a message sent from computer 700, through Internet 790, ISP equipment 784, local network 780 and communications interface 770. The received code may be executed by processor 702 as it is received, or may be stored in memory 704 or in storage device 708 or any other non-volatile storage for later execution, or both. In this manner, computer system 700 may obtain application program code in the form of signals on a carrier wave.

Various forms of computer readable media may be involved in carrying one or more sequence of instructions or data or both to processor 702 for execution. For example, instructions and data may initially be carried on a magnetic disk of a remote computer such as host 782. The remote computer loads the instructions and data into its dynamic memory and sends the instructions and data over a telephone line using a modem. A modem local to the computer system 700 receives the instructions and data on a telephone line and uses an infra-red transmitter to convert the instructions and data to a signal on an infra-red carrier wave serving as the network link 778. An infrared detector serving as communications interface 770 receives the instructions and data carried in the infrared signal and places information representing the instructions and data onto bus 710. Bus 710 carries the information to memory 704 from which processor 702 retrieves and executes the instructions using some of the data sent with the instructions. The instructions and data received in memory 704 may optionally be stored on storage device 708, either before or after execution by the processor 702.

FIG. 8 illustrates a chip set or chip 800 upon which an embodiment of the invention may be implemented. Chip set 800 is programmed to enable a web client to store dynamic binary content offline as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 800 can be implemented in a single chip. It is further contemplated that in certain embodiments the chip set or chip 800 can be implemented as a single "system on a chip." It is further contemplated that in certain embodiments a separate ASIC would not be used, for example, and that all relevant functions as disclosed herein would be performed by a processor or processors. Chip set or chip 800, or a portion thereof, constitutes a means for performing one or more steps of providing user interface navigation information associated with the availability of functions. Chip set or chip 800, or a portion thereof, constitutes a means for performing one or more steps of enabling a web client to store dynamic binary content offline.

In one embodiment, the chip set or chip 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a more general purpose processor. Other specialized components to aid in performing the inventive functions described herein may include one or more field programmable gate arrays (FPGA), one or more controllers, or one or more other special-purpose computer chips.

In one embodiment, the chip set or chip 800 includes merely one or more processors and some software and/or firmware supporting and/or relating to and/or for the one or more processors.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to enable a web client to store dynamic binary content offline. The memory 805 also stores the data associated with or generated by the execution of the inventive steps.

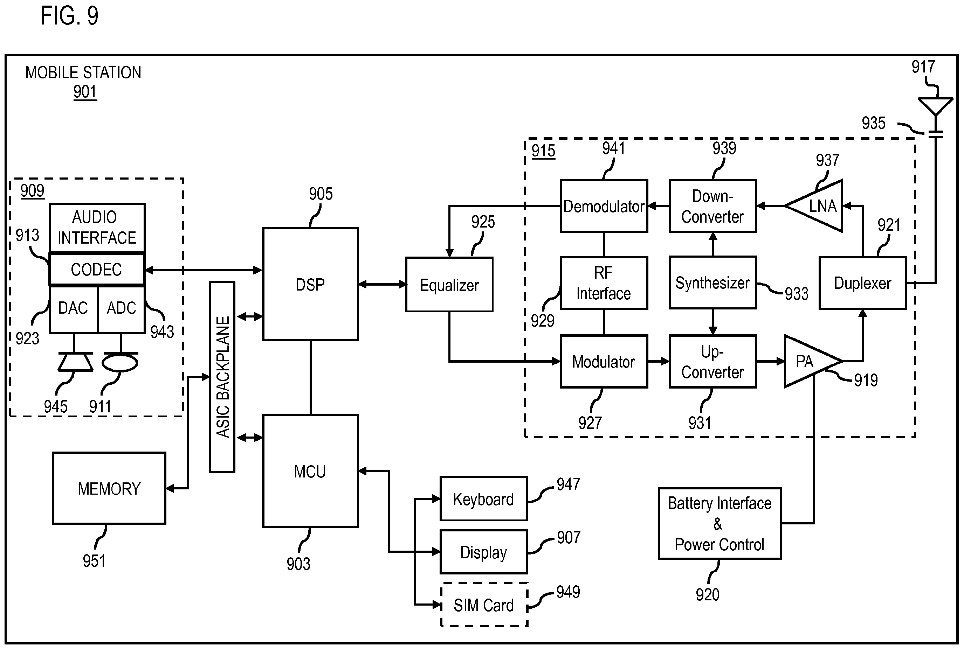

FIG. 9 is a diagram of exemplary components of a mobile terminal (e.g., handset) for communications, which is capable of operating in the system of FIG. 1, according to one embodiment. In some embodiments, mobile terminal 901, or a portion thereof, constitutes a means for performing one or more steps of enabling a web client to store dynamic binary content offline. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile phone or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile phone or a similar integrated circuit in a cellular network device or other network devices.

Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile terminal functions that perform or support the steps of enabling a web client to store dynamic binary content offline. The display 907 includes display circuitry configured to display at least a portion of a user interface of the mobile terminal (e.g., mobile telephone). Additionally, the display 907 and display circuitry are configured to facilitate user control of at least some functions of the mobile terminal. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile terminal 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, any other mobile phone or a land-line connected to a Public Switched Telephone Network (PSTN), or other telephony networks.

Voice signals transmitted to the mobile terminal 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903 which can be implemented as a Central Processing Unit (CPU).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile terminal 901 to enable a web client to store dynamic binary content offline. The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the terminal. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile terminal 901.

The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable storage medium known in the art. The memory device 951 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 949 carries, for instance, important information, such as the cellular phone number, the carrier supplying service, subscription details, and security information. The SIM card 949 serves primarily to identify the mobile terminal 901 on a radio network. The card 949 also contains a memory for storing a personal telephone number registry, text messages, and user specific mobile terminal settings.

While the invention has been described in connection with a number of embodiments and implementations, the invention is not so limited but covers various obvious modifications and equivalent arrangements, which fall within the scope of the appended claims. Although features of the invention are expressed in certain combinations among the claims, it is contemplated that these features can be arranged in any combination and order.

## Claims

1. A method comprising:
determining (301) a request from a web client (103) for binary data;
causing (303), at least in part, an encoding of the binary data into text data that is compatible with one or more databases (111a) of the web client (103) that can hold multiple tables or object stores;
causing (305), at least in part, a transmission of the text data to the web client (103),
wherein the binary data is decodable from the text data, and
determining (307) other data associated with the binary data;
causing (309), at least in part, an association of the other data with the text data for presentation at the web client (103).

2. A method according to claim 1, wherein the binary data is related to mapping information, and wherein the other data includes, at least in part, coordinate data, point-of-interest data, transportation data, street name data, icon data, advertisement data, or a combination thereof.

3. A method according to any of claims 1 to 2, wherein the binary data is decoded from the text data based, at least in part, on an offline state of the web client (103), resource availability information, or a combination thereof.

4. A method according to any of claims 1 to 3, wherein the binary data includes, at least in part, map tile data, multimedia data, or a combination thereof.

5. A method comprising:
Causing (401), at least in part, a transmission of a request for binary data for presentation in a web client (103);
Receiving (403), in response to the request, text data encoding, at least in part, the binary data;
Causing (405), at least in part, a storage of the text data into one or more databases (111a) associated with the web client (103) that can hold multiple tables or object stores;
processing and/or facilitating a processing of the text data to cause, at least in part, an extraction, an addition, or a combination thereof of other data associated with the binary data; and
causing, at least in part, a presentation of at least a portion of the other data in association with the binary data.

6. A method according to claim 5, wherein the binary data includes, at least in part, map tile data, image data, or a combination thereof, and wherein the other data includes, at least in part, coordinate data, point-of-interest data, transportation data, street name data, icon data, advertisement data, or a combination thereof.

7. A method according to any of claims 5 to 6, further comprising:
Causing (409), at least in part, a decoding, a use, or a combination thereof of the text data in the one or more databases that can hold multiple tables or object stores to determine the binary data,
wherein the decoding, the use, or a combination thereof is based, at least in part, on an offline state of the web client (103), resource availability information, or a combination thereof.

8. A method according to any of claims 5 to 7, wherein the one or more databases (111a) that can hold multiple tables or object stores are persistent.

9. An apparatus comprising:
means for determining a request from a web client (103) for binary data;means for causing, at least in part, an encoding of the binary data into text data that is compatible with one or more databases (111a) of the web client (103) that can hold multiple tables or object stores;
means for causing, at least in part, a transmission of the text data to the web client (103),
wherein the binary data is decodable from the text data, and means for determining other data associated with the binary data;
means for causing, at least in part, an association of the other data with the text data for presentation at the web client (103).

10. An apparatus comprising means configured to cause the apparatus to at least perform the method according to any of claims 2 to 4.

11. An apparatus comprising:
means for causing, at least in part, a transmission of a request for binary data for presentation in a web client (103);
means for receiving, in response to the request, text data encoding, at least in part, the binary data; and
means for causing, at least in part, a storage of the text data into one or more databases (111a) associated with the web client (103) that can hold multiple tables or object stores,
means for processing and/or facilitating a processing of the text data to cause, at least in part, an extraction, an addition, or a combination thereof of other data associated with the binary data; and
means for causing, at least in part, a presentation of at least a portion of the other data in association with the binary data.

12. An apparatus comprising means configured to cause the apparatus to at least perform the method according to any of claims 6 to 8.

13. A computer-readable storage medium carrying one or more sequences of one or more instructions which, when executed by one or more processors, cause an apparatus to at least perform a method according to any of claims 1 to 4 and a method according to any of claims 5 to 8.

## Patentansprüche

1. Verfahren, umfassend:
Ermitteln (301) einer Anforderung eines Web-Clients (103) nach Binärdaten;
Veranlassen (303), mindestens teilweise, einer Codierung der Binärdaten in Textdaten, die mit einer oder mehreren Datenbanken (111a) des Web-Clients (103), welche mehrere Tabellen oder Objektspeicher halten können, kompatibel ist;
Veranlassen (305), mindestens teilweise, einer Übertragung der Textdaten an den Web-Client (103), wobei die Binärdaten aus den Textdaten decodierbar sind, und
Ermitteln (307) weiterer mit den Binärdaten assoziierter Daten;
Veranlassen (309), mindestens teilweise, einer Assoziierung der anderen Daten mit den Textdaten zur Präsentation auf dem Web-Client (103).

2. Verfahren nach Anspruch 1, wobei die Binärdaten sich auf Karteninformationen beziehen und die anderen Daten, mindestens teilweise, Koordinatendaten, Point-of-Interest-Daten, Verkehrsdaten, Straßennamendaten, Symboldaten, Werbedaten oder eine Kombination davon umfassen.

3. Verfahren nach einem der Ansprüche 1 oder 2, wobei die Binärdaten aus den Textdaten basierend, mindestens teilweise, auf einem Offline-Zustand des Web-Clients (103), Ressourcenverfügbarkeitsinformationen oder einer Kombination davon decodiert werden.

4. Verfahren nach einem der Ansprüche 1 bis 3, wobei die Binärdaten, mindestens teilweise, Kartenkacheldaten, Multimediadaten oder eine Kombination davon umfassen.

5. Verfahren, umfassend:
Veranlassen (401), mindestens teilweise, einer Übertragung einer Anforderung nach Binärdaten zur Präsentation auf einem Web-Client (103);
Empfangen (403), in Reaktion auf die Anforderung, von Textdaten, welche, mindestens teilweise, die Binärdaten codieren;
Veranlassen (405), mindestens teilweise, einer Speicherung der Textdaten in einer oder mehreren mit dem Web-Client (103) assoziierten Datenbanken (lila), die mehrere Tabellen oder Objektspeicher halten können;
Verarbeiten und/oder Unterstützen einer Verarbeitung der Textdaten, um, mindestens teilweise, eine Extraktion, eine Hinzufügung oder eine Kombination davon von mit den Binärdaten assoziierten anderen Daten zu veranlassen; und
Veranlassen, mindestens teilweise, einer Präsentation mindestens eines Abschnitts der anderen Daten in Assoziation mit den Binärdaten.

6. Verfahren nach Anspruch 5, wobei die Binärdaten, mindestens teilweise, Kartenkacheldaten, Bilddaten oder eine Kombination davon umfassen, und wobei die anderen Daten, mindestens teilweise, Koordinatendaten, Point-of-Interest-Daten, Verkehrsdaten, Straßennamendaten, Symboldaten, Werbedaten oder eine Kombination davon umfassen.

7. Verfahren nach einem der Ansprüche 5 bis 6, ferner umfassend:
Veranlassen (409), mindestens teilweise, einer Decodierung, einer Verwendung oder einer Kombination davon der Textdaten in den einen oder mehreren Datenbanken, die mehrere Tabellen oder Objektspeicher halten können, um die Binärdaten zu bestimmen,
wobei das Decodieren, die Verwendung oder eine Kombination davon, mindestens teilweise, auf einem Offline-Zustand des Web-Clients (103), Ressourcenverfügbarkeitsinformationen oder einer Kombination davon beruht.

8. Verfahren nach einem der Ansprüche 5 bis 7, wobei die einen oder mehreren Datenbanken (lila), die mehrere Tabellen oder Objektspeicher halten können, persistent sind.

9. Vorrichtung, umfassend:
Mittel zum Ermitteln einer Anforderung eines Web-Clients (103) nach Binärdaten;
Mittel zum Veranlassen, mindestens teilweise, einer Codierung der Binärdaten in Textdaten, die mit einer oder mehreren Datenbanken (111a) des Web-Clients (103), welche mehrere Tabellen oder Objektspeicher halten können, kompatibel ist;
Mittel zum Veranlassen mindestens teilweise, einer Übertragung der Textdaten an den Web-Client (103), wobei die Binärdaten aus den Textdaten decodierbar sind; und
Mittel zum Ermitteln anderer Daten, die mit den Binärdaten assoziiert sind;
Mittel zum Veranlassen, mindestens teilweise, einer Assoziierung der anderen Daten mit den Textdaten zur Präsentation auf dem Web-Client (103).

10. Vorrichtung mit Mitteln, die dazu eingerichtet sind, die Vorrichtung mindestens zum Durchführen des Verfahrens nach einem der Ansprüche 2 bis 4 zu veranlassen.

11. Vorrichtung, umfassend:
Mittel zum Veranlassen, mindestens teilweise, einer Übertragung einer Anforderung nach Binärdaten zur Präsentation auf einem Web-Client (103);
Mittel zum Empfangen, in Reaktion auf die Anforderung, von Textdaten, welche, mindestens teilweise, die Binärdaten codieren; und
Mittel zum Veranlassen, mindestens teilweise, einer Speicherung der Textdaten in einer oder mehreren mit dem Web-Client (103) assoziierten Datenbanken (lila), die mehrere Tabellen oder Objektspeicher halten können;
Mittel zum Verarbeiten und/oder Unterstützen einer Verarbeitung der Textdaten, um, mindestens teilweise, eine Extraktion, eine Hinzufügung oder eine Kombination davon von mit den Binärdaten assoziierten anderen Daten zu veranlassen; und
Mittel zum Veranlassen, mindestens teilweise, einer Präsentation mindestens eines Abschnitts der anderen Daten in Assoziation mit den Binärdaten.

12. Vorrichtung mit Mitteln, die dazu eingerichtet sind, die Vorrichtung mindestens zum Durchführen des Verfahrens nach einem der Ansprüche 6 bis 8 zu veranlassen.

13. Computerlesbares Speichermedium, welches eine oder mehrere Sequenzen aus einer oder mehreren Anweisungen trägt, welche, wenn sie von einem oder mehreren Prozessoren ausgeführt werden, eine Vorrichtung dazu veranlassen, mindestens ein Verfahren nach einem der Ansprüche 1 bis 4 und ein Verfahren nach einem der Ansprüche 5 bis 8 durchzuführen.

## Revendications

1. Procédé comprenant les étapes consistant à :
déterminer (301) une demande provenant d'un client Web (103) pour des données binaires ;
provoquer (303), au moins en partie, un codage des données binaires en données de texte compatibles avec une ou plusieurs bases de données (111a) du client Web (103) pouvant contenir plusieurs tables ou magasins d'objets ;
provoquer (305), au moins en partie, une transmission des données de texte au client Web (103),
dans lequel les données binaires sont décodables à partir des données de texte, et
déterminer (307) d'autres données associées aux données binaires ;
provoquer (309), au moins en partie, une association des autres données avec les données de texte pour une présentation au client Web (103).

2. Procédé selon la revendication 1, dans lequel les données binaires sont liées à des informations de mise en correspondance, et dans lesquelles les autres données comprennent, au moins en partie, des données de coordonnées, des données de points d'intérêt, des données de transport, des données de noms de rue, des données d'icône, des données de publicité, ou une combinaison de celles-ci.

3. Procédé selon l'une quelconque des revendications 1 à 2, dans lequel les données binaires sont décodées à partir des données de texte sur la base, au moins en partie, d'un état hors ligne du client Web (103), d'informations de disponibilité des ressources ou d'une combinaison de ceux-ci.

4. Procédé selon l'une quelconque des revendications 1 à 3, dans lequel les données binaires comprennent, au moins en partie, des données de mosaïque de carte, des données multimédia ou une combinaison de celles-ci.

5. Procédé comprenant les étapes consistant à :
provoquer (401), au moins en partie, une transmission d'une demande de données binaires pour une présentation dans un client Web (103) ;
recevoir (403), en réponse à la requête, des données de texte codant, au moins en partie, les données binaires ;
provoquer (405), au moins en partie, un stockage des données de texte dans une ou plusieurs bases de données (111a) associées au client Web (103) pouvant contenir plusieurs tables ou magasins d'objets ;
traiter et / ou faciliter un traitement des données de texte pour provoquer, au moins en partie, une extraction, une addition ou une combinaison à celles-ci d'autres données associées aux données binaires ; et
provoquer, au moins en partie, une présentation d'au moins une partie des autres données en association avec les données binaires.

6. Procédé selon la revendication 5, dans lequel les données binaires comprennent, au moins en partie, des données de mosaïque de carte, des données d'image, ou une combinaison de celles-ci, et dans lequel les autres données comprennent, au moins en partie, des données de coordonnées, des données de point d'intérêt, des données de transport, des données de nom de rue, des données d'icône, des données de publicité ou une combinaison de celles-ci.

7. Procédé selon l'une quelconque des revendications 5 à 6, comprenant en outre l'étape consistant à :
provoquer (409), au moins en partie, un décodage, une utilisation ou une combinaison de ceux-ci, des données de texte dans lesdites une ou plusieurs bases de données pouvant contenir plusieurs tables ou magasins d'objets pour déterminer les données binaires,
dans lequel le décodage, l'utilisation ou une combinaison de ceux-ci est réalisé sur la base, au moins en partie, d'un état hors ligne du client Web (103), des informations de disponibilité des ressources ou d'une combinaison de ceux-ci.

8. Procédé selon l'une quelconque des revendications 5 à 7, dans lequel lesdites une ou plusieurs bases de données (111a) pouvant contenir plusieurs tables ou magasins d'objets sont persistantes.

9. Appareil comprenant :
des moyens pour déterminer une demande provenant d'un client Web (103) pour des données binaires, des moyens pour provoquer, au moins en partie, un codage des données binaires en données de texte compatibles avec une ou plusieurs bases de données (111a) du client Web (103) pouvant contenir plusieurs tables ou magasins d'objets ;
des moyens pour provoquer, au moins en partie, une transmission des données de texte au client Web (103),
dans lequel les données binaires sont décodables à partir des données de texte, et des moyens pour déterminer d'autres données associées aux données binaires ;
des moyens pour provoquer, au moins en partie, une association des autres données avec les données de texte pour une présentation au client Web (103).

10. Appareil comprenant des moyens configurés pour amener l'appareil à au moins réaliser le procédé selon l'une quelconque des revendications 2 à 4.

11. Appareil comprenant :
des moyens pour provoquer, au moins en partie, une transmission d'une demande de données binaires pour une présentation dans un client Web (103) ;
des moyens pour recevoir, en réponse à la requête, des données de texte codant, au moins en partie, les données binaires ; et
des moyens pour provoquer, au moins en partie, un stockage des données de texte dans une ou plusieurs bases de données (111a) associées au client Web (103) pouvant contenir plusieurs tables ou magasins d'objets,
des moyens pour traiter et / ou faciliter un traitement des données de texte pour provoquer, au moins en partie, une extraction, une addition ou une combinaison à celles-ci d'autres données associées aux données binaires ; et
des moyens pour provoquer, au moins en partie, la présentation d'au moins une partie des autres données en association avec les données binaires.

12. Appareil comprenant des moyens configurés pour amener l'appareil à au moins réaliser le procédé selon l'une quelconque des revendications 6 à 8.

13. Support de stockage lisible par ordinateur portant une ou plusieurs séquences d'une ou plusieurs instructions qui, lorsqu'elles sont exécutées par un ou plusieurs processeurs, amènent un appareil à au moins réaliser un procédé selon l'une quelconque des revendications 1 à 4 et un procédé selon l'une quelconque des revendications 5 à 8.
